(19) Europäisches Patentamt / European Patent Office / Office européen des brevets

(11) **EP 3 385 778 A1**

(12) **EUROPEAN PATENT APPLICATION**

(43) Date of publication:
**10.10.2018 Bulletin 2018/41**

(51) Int Cl.:
*G02F 1/01* *(2006.01)*

(21) Application number: **17165383.5**

(22) Date of filing: **06.04.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (72) Inventors:<br>• ALOUINI, Mehdi<br>  35140 GOSNE (FR)<br>• FADE, Julien<br>  35590 L'HERMITAGE (FR)<br>• ORTEGA-QUIJANO, Noé<br>  20012 SAN SEBASTIAN (ES) |
| (71) Applicants:<br>• **Université de Rennes 1**<br>  **35065 Rennes Cedex (FR)**<br>• **CENTRE NATIONAL DE LA RECHERCHE SCIENTIFIQUE**<br>  **75016 Paris (FR)** | (74) Representative: **Verriest, Philippe et al**<br>**Cabinet Germain & Maureau**<br>**12, rue Boileau**<br>**BP 6153**<br>**69466 Lyon Cedex 06 (FR)** |

(54) **COHERENT LIGHT SOURCE WITH FULLY CONTROLLABLE STATE AND DEGREE OF POLARIZATION**

(57) The present invention relates to a process for emitting a depolarized light beam (200) with a controllable state of polarization and a controllable degree of polarization by supplying a first light beam (201) and a second light beam (202), attenuating the intensity so as to control the degree of polarization and shifting the frequency of the first frequency and/or the second frequency so as to control the state of polarization.

Fig. 1

**Description**

## TECHNICAL FIELD OF THE INVENTION

The present invention concerns a process for emitting a depolarized light beam with a controllable state of polarization and a controllable degree of polarization.

## STATE OF THE ART

The precise control of the polarization of light is an essential aspect in many optical and photonic techniques. A polarized light beam is characterized by its state of polarization (SOP for short) and by its degree of polarization (DOP for short). The various types of lasers, the use of which is widely used, constitute coherent optical radiation sources emitting fully polarized beams (i.e. characterized by a DOP equal to 1) in general. The polarization state of the emitted beam can be controlled and manipulated by conventional techniques. Conversely, natural light sources and most artificial light sources are incoherent and completely depolarized.

Some applications, such as fiber sensors, fiber optic gyroscopes or optical power amplifiers, require the use of fully depolarized beams (DOP almost equal to 0) to avoid degradation of the system performance due to polarization-dependent fluctuations. For this purpose, depolarizers may be used in order to transform a fully polarized beam into a totally depolarized beam.

The availability of coherent sources capable of providing a controllable polarization beam with a controllable degree of polarization in the range of 0 to 1 would have great potential for many applications like calibration of polarimeters and polarimetric cameras, speckle grain-scale polarization metrology, multi-scale characterization of surface roughness, and analysis of channel noise effects in quantum communications systems. However, existing technologies are insufficient to meet these needs.

The present invention is based on a new approach allowing producing a coherent source with a controllable state of polarization and a controllable degree of polarization totally and independently tunable at a chosen rate and possessing all possible properties of temporal coherence. Depending on the nature of the initial source chosen, it is possible to obtain a low-coherence beam (laser source with a wide bandwidth, a super luminescent source, a pulsed laser, etc.) but also an extremely coherent light beam (laser source, etc.).

## SUMMARY OF THE INVENTION

In order to achieve this objective, the present invention provides, according to an aspect, a process for emitting a depolarized light beam with a controllable state of polarization and a controllable degree of polarization; said process comprising:

- supply of a first light beam having a first intensity value and a first frequency and of a second light beam having a second intensity value and a second frequency; said first intensity value differing from said second intensity value;

- frequency shift of at least one of said first frequency and said second frequency such that said first frequency differs from said second frequency; and,

- combination of said first light beam and of said second light beam into said depolarized light beam.

Thus, this arrangement allows emitting a depolarized light beam with a controllable state of polarization and a controllable degree of polarization.

The process may comprise one or a plurality of the following technical features, which may be considered alone or in combination.

According to an embodiment, said supply comprises an intensity attenuation of at least one of said first light beam and said second light beam such that said first intensity value differs from said second intensity value as a function of time.

Thus, this arrangement allows an intensity attenuation of at least one of the first light beam and the second light beam.

According to an embodiment, said first light beam has a first polarization component and said second light beam has a second polarization component and wherein said supply comprises a polarization control of at least one of said first polarization component and said second polarization component such that said first polarization component is orthogonal to said second polarization component.

Thus, this arrangement allows the first polarization component to be orthogonal to said second polarization component.

According to an embodiment, said supply comprises a split of a coherent light beam into said first light beam and said second light beam.

Thus, this arrangement allows a split of a coherent light beam into said first light beam and said second light beam.

According to an embodiment, said combination comprises a polarization adjustment configured to adjust the first polarization component and the second polarization component.

Thus, this arrangement allows adjusting the first polarization component and the second polarization component.

According to an embodiment, said depolarized light beam, comprises a degree of polarization being the absolute value of the difference of said first intensity value and said second intensity value divided by the absolute value of the sum of said first intensity value and said second intensity value.

Thus, this arrangement allows the degree of polarization to be a function of the first intensity value and said second intensity value.

According to an embodiment, said frequency shift is of the order of 1 MHz to 10 THz.

The present invention provides an emitting module for emitting a depolarized light beam with a controllable state of polarization and a controllable degree of polarization; said emitting module comprising:

- a supply unit; said supply unit being configured to supply a first light beam having a first intensity value and a first frequency and a second light beam having a second intensity value and a second frequency, said first intensity value differing from said second intensity value intensity; said supply unit comprising a frequency shifter being configured to shift the frequency of at least one of said first frequency and said second frequency such that said first frequency differs from said second frequency;

- a beam-combiner; said beam-combiner being configured to combine said first light beam and said second light beam into said depolarized light beam.

Thus, this arrangement allows emitting a depolarized light beam with a controllable state of polarization and a controllable degree of polarization.

The emitting module may present one or a plurality of the following technical features which may be taken alone or in combination.

According to an embodiment, said supply unit comprises an intensity attenuator; said intensity attenuator being configured to attenuate the intensity of at least one of said first light beam and said second light beam such that said first intensity value differs from said second intensity value as a function of time.

According to an embodiment, said intensity attenuator is a variable optical attenuator or an association of a waveplate and a polarizer.

Thus, this arrangement allows an intensity attenuation of at least one of the first light beam and the second light beam as a function of time.

According to an embodiment, said first light beam has a first polarization component and said second light beam has a second polarization component and wherein said supply unit comprises a polarization controller is configured to control at least one of said first polarization component and said second polarization component such that said first polarization component is orthogonal to said second polarization component.

Thus, this arrangement allows the first polarization component to be orthogonal to said second polarization component.

According to an embodiment, said beam-combiner comprises a phase adjuster polarization modulation device configured to adjust the first polarization state phase of said first frequency and the second polarization state phase of said second frequency.

Thus, this arrangement allows adjusting the first polarization state phase and the second polarization state phase.

According to an embodiment, said supply unit comprising a beam-splitter; said beam-splitter being configured to split a light beam from a coherent light emitting device into said first light beam and said second light beam.

Thus, this arrangement allows a split of a coherent light beam into said first light beam and said second light beam.

According to an embodiment, said frequency shifter is an acousto-optic modulator and/or an electro-optic modulator.

Thus, this arrangement allows a frequency shift of the at least one of the first light beam and the second light beam.

The present invention provides a controllable state and degree of polarization light source comprises at least one light emitting device and an emitting module according to the invention.

Thus, this arrangement allows emitting a depolarized light beam with a controllable state of polarization and a controllable degree of polarization.

According to an embodiment, said emitting module (100) is comprised inside said at least one light emitting device (190).

According to an embodiment, said at least one light emitting device (190) comprises an intensity attenuating device.

According to an embodiment, said intensity attenuating device is formed by an intensity attenuator.

According to an embodiment, said intensity attenuator includes an intensity attenuator element provided inside the light emitting element.

Thus, this arrangement allows intensity attenuation of at least one of the first light beam and the second light beam inside a dual-frequency laser cavity.

The present invention provides an assembly comprising at least one emitting module according to the invention configured to emit a depolarized light beam with a controllable state of polarization and a controllable degree of polarization on an observed element and a detector having a bandwidth lower than the frequency shift of said frequency shifter, said detector being configured to receive a transmitted depolarized light beam from said observed element.

Thus, this arrangement allows emitting a depolarized light beam with a controllable state of polarization and a controllable degree of polarization and the detection thereof.

In the detailed description of the invention, the same elements or elements fulfilling identical functions may retain the same references in order to simplify the understanding of the invention.

## BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:

- figures 1, 2A and 2B represent a controllable state and degree of polarization light source comprising at least one light emitting device **190** according to an embodiment of the present invention, a schematic representation and a controllable state and degree of polarization light source comprising a light emitting device **190** and an emitting module **100** provided inside the light emitting element according to another embodiment of the present invention respectively;

- figure 3 shows an emitting module **100** according to the same embodiment of the present invention;

- figure 4 illustrates the plot of the measured degree of polarization **931** and the theoretical degree of polarization **932** according to the same or another embodiment of the present invention;

- figure 5 presents an emitting module **100** with waveform generator to drive the acousto-optic modulator **192** according to another embodiment of the present invention;

- figure 6 shows a plot of detector **300** following the degree of polarization fluctuation as a function of $\gamma(t)$ according to an embodiment of the present invention;

- figure 7 shows how the state of polarization varies over the whole surface of the Poincaré sphere at very high speed according to an embodiment of the present invention.

## DESCRIPTION OF THE INVENTION

The present invention provides a depolarized light beam **200** with fully and independently controllable state of polarization and a controllable degree of polarization by using a controllable state and degree of polarization light source comprising at least one light emitting device **190** and an emitting module **100**. The emitting module **100** may implement a process for emitting a depolarized light beam **200**. The emitting module **100** comprises a supply unit **110** and a beam-combiner **170**.

This depolarized light beam **200** may be based on two different light emitting devices **190,** two identical light emitting devices **190,** a single coherent light source or a single light source having different frequencies and/or polarizations. In the case of a coherent light beam, the coherent light beam may be split, during a step of a supply, into a first light beam **201** and a second light beam **202** by a beam-splitter **141** comprised in the supply unit **110.**

Thus, the supply unit **110** may supply a first light beam **201** having a first intensity value $I_1(t)$ and a first frequency $v_1$ and of a second light beam **202** having a second intensity value $I_2(t)$ and a second frequency $v_2$. The first intensity value differs from said second intensity value. The intensity of the first light beam **201** and the second light beam **202** may vary as a function of time. This variation may occur during the supply step by implementing an intensity attenuation of at least one of the first light beam **201** and the second light beam **202** such that the first intensity value $I_1(t)$ differs from the second intensity value $I_2(t)$ as a function of time. This intensity attenuation is achieved by an intensity attenuator **130,** which can be a variable optical intensity attenuator or an association of a waveplate and a polarizer.

In the case, where the light emitting device **190** is a single light source having different frequencies and/or polarizations, in particular the first light beam **201** and the second light beam **202,** the emitting module **100** may be comprised inside the light emitting device **190**. An intensity attenuating device, comprised inside the light emitting device **190,** may be formed by an intensity attenuator **130** including an intensity attenuator element **131** provided inside the light emitting element like an intracavity polarization-dependent intensity control. This intensity attenuating device may attenuate at least one of the first light beam **201** and the second light beam **202** such that the first intensity value $I_1(t)$ differs from the second intensity value $I_2(t)$ as a function of time

From the first intensity value $I_1(t)$ and the second intensity value $I_2(t)$, a ratio $\gamma$ is formed between the first intensity value $I_1(t)$ and the second intensity value $I_2(t)$:

$$\gamma = \frac{I_1(t)}{I_2(t)}$$

Thereafter, a step of a polarization control, during the step of supply, may be realized by a polarization controller **140** so as to provide a control of the polarization of the first light beam **201** and the second light beam **202,** which may have a first polarization component **203,** also known as first mode $\vec{e}_1$, and the second polarization component **204,** also known as second mode $\vec{e}_2$. After the polarization control, the first polarization component **203** may be orthogonal to the second polarization component **204.**

Indeed, the step of a polarization control may supply two polarization components or orthogonal modes whose superposition may yield a transversal electric field along a direction that can be expressed as:

$$\vec{E}(t) = \begin{bmatrix} E_1(t) \\ E_2(t) \end{bmatrix} = \frac{E_0}{2} e^{-i2\pi v_1 t}(\vec{e}_1 + \sqrt{\gamma} e^{-i2\pi \Delta v t}\vec{e}_2)$$

Independently of the polarization control and of the intensity attenuation, the supply unit **110** may comprise a frequency shifter **150** configured to shift the frequency of at least one of the first frequency $v_1$ and the second frequency $v_2$ such that the first frequency $v_1$ differs from said second frequency $v_2$ by $\Delta v$ where $\Delta v$ is the frequency shift between the first frequency $v_1$ and the second frequency $v_2$. The frequency shift may be realized by a frequency shifter **150** being an acousto-optic modulator and/or an electro-optic modulator for example.

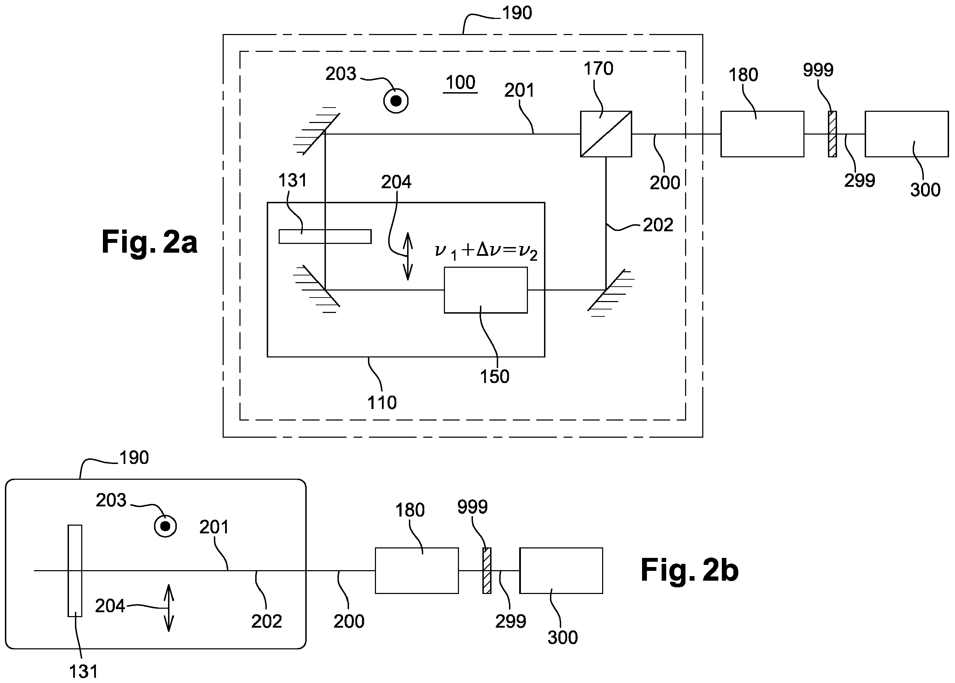

For readability and comprehension reasons, on figures 2A and 2B, the emitting module **100** is comprised inside the light emitting device **190** with the frequency shifter **150,** the beam-combiner **170,** and the intensity attenuator element **131**. According to a preferred embodiment, the light emitting device **190** such as a dual-frequency laser cavity may supply the depolarized light beam **200** without the frequency shifter **150** and the beam-combiner **170** since the light emitting device **190** may supply the first light beam **201** with first frequency $v_1$ and with the first polarization component **203** orthogonal to the second light beam **202** with frequency $v_2$ and with the second polarization component **204** as represented on figure 2B.

As previously mentioned, the first light beam may have the first frequency $v_1$ shifted and/or the first intensity value $I_1$ or the second light beam may have the second frequency $v_2$ shifted and/or the second intensity value $I_2$.

If the polarization ellipse azimuth and ellipticity are respectively denoted $\alpha$ and $\epsilon$, the general parameterized form of the first polarization component **203** of the first light beam **201** and the second polarization component **204** of the second light beam **202** may be:

$$\vec{e}_1 = \begin{bmatrix} C_\alpha\,C_\epsilon - iS_\alpha\,S_\epsilon \\ S_\alpha\,C_\epsilon - iC_\alpha\,S_\epsilon \end{bmatrix}$$

$$\vec{e}_2 = \begin{bmatrix} -S_\alpha\,C_\epsilon + iC_\alpha\,S_\epsilon \\ C_\alpha\,C_\epsilon + iS_\alpha\,S_\epsilon \end{bmatrix}$$

where the compact notation $C_\alpha$ meaning $\cos(\alpha)$ *and* $S_\alpha$ meaning $\sin(\alpha)$ has been used. The instantaneous Stokes vector

$\vec{S}(t)$ is linked to the complex electric field components by

$$\vec{S}(t) = \begin{bmatrix} E_1(t)E_1^*(t) + E_2(t)E_2^*(t) \\ E_1(t)E_1^*(t) - E_2(t)E_2^*(t) \\ E_1(t)E_2^*(t) + E_2(t)E_1^*(t) \\ i\{E_1(t)E_1^*(t) + E_2(t)E_2^*(t)\} \end{bmatrix}$$

By introducing $\vec{E}(t) = \frac{E_0}{2} e^{-i2\pi v_1 t}(\vec{e}_1 + \sqrt{\gamma} e^{-i\Delta 2\pi \Delta v t}\vec{e}_2)$ into $\vec{S}(t)$, and normalizing by the sum of the first intensity value $I_1$ and the second intensity value $I_2$, the instantaneous Stokes vector $\vec{S}(t)$ may be:

$$\vec{S}(t) = \begin{bmatrix} 1 \\ \dfrac{C_{2\alpha}[(1-\gamma)\,C_{2\epsilon} - 2\sqrt{\gamma}\,S_{2\epsilon}\,S_{2\pi\Delta vt}] - 2\sqrt{\gamma}\,S_{2\alpha}\,C_{2\pi\Delta vt}}{1+\gamma} \\ \dfrac{S_{2\alpha}[(1-\gamma)\,C_{2\epsilon} - 2\sqrt{\gamma}\,S_{2\epsilon}\,S_{2\pi\Delta vt}] + 2\sqrt{\gamma}\,C_{2\alpha}\,C_{2\pi\Delta vt}}{1+\gamma} \\ \dfrac{(1-\gamma)\,S_{2\epsilon} + 2\sqrt{\gamma}\,S_{2\epsilon}\,S_{2\pi\Delta vt}}{1+\gamma} \end{bmatrix}$$

Such an instantaneous Stokes vector corresponds to a totally polarized beam whose state of polarization follows a temporal evolution governed by the azimuth, ellipticity, and imbalance of the orthogonal modes, and by the frequency shift. Relevantly, the time variation scale characterized by the time constant $\tau_{beam} = 1/\Delta v$ can be controlled. Typically, the frequency shift between the first frequency $v_1$ and the second frequency $v_2$ may lie in the megahertz to tens of terahertz radio-frequency range.

However, if the depolarized light beam **200** is measured by a detector **300,** like a photodetector or polarimeter, whose bandwidth is smaller than the frequency shift, then $\tau_{beam}$ is negligible compared to the time constant of the detector $\tau_{detector}$ and a time-averaged Stokes vector will thus be measured instead of the instantaneous one. Time-averaging results in the following Stokes vector:

$$\vec{S} = \langle \vec{S}(t) \rangle = \begin{bmatrix} 1 \\ \dfrac{1-\gamma}{1+\gamma}\,C_{2\alpha}\,C_{2\epsilon} \\ \dfrac{1-\gamma}{1+\gamma}\,S_{2\alpha}\,S_{2\epsilon} \\ \dfrac{1-\gamma}{1+\gamma}\,S_{2\epsilon} \end{bmatrix}$$

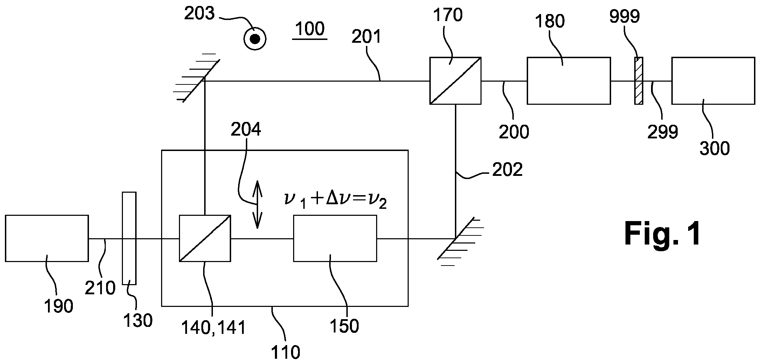

The photodetector **300** may be comprised in an assembly comprising at least one emitting module **100** configured to emit a depolarized light beam **200** on an observed element **999** and the detector **300** which may have a bandwidth lower than the frequency shift of the frequency shifter **150.** The detector **300** may be configured to receive a transmitted depolarized light beam **299** from the observed element **999** as shown in fig. 1.

A direct comparison of this vector with the parametric expression of a Stokes vector in the Poincaré sphere shows that the azimuth and ellipticity of the measured state of polarization are the azimuth and ellipticity of said first polarization component **203** when the first intensity value $I_1(t)$ is greater than the second intensity value $I_2(t)$, or the azimuth and ellipticity of said second polarization component **204** when the first intensity value $I_1(t)$ is smaller than the second intensity value $I_2(t)$, while the degree of polarization, DOP for short, is fully determined by the modes imbalance:

$$DOP = \frac{|I_1(t) - I_2(t)|}{|I_1(t) + I_2(t)|}$$

This degree of polarization is described by the absolute value of the difference of said first intensity value and said second intensity value divided by the absolute value of the sum of said first intensity value and said second intensity value.

After realized a first and a second light beam having the first polarization component **203** and the second polarization component **204** orthogonal to each other and the first intensity value $I_1(t)$ and the second intensity value $I_2(t)$ varying as a function of time, a beam-combiner **170** may combine the first light beam **201** and the second light beam **202** into the depolarized light beam **200** and the emitting module **100** may apply a polarization adjustment via a polarization adjustment device **180** in order to adjust the first polarization component **203** and the second polarization component **204.**

Therefore, the superposition of two light beams, having different frequencies and intensities, constitutes a straightforward way of emitting a depolarized light beam **200** with a controllable state of polarization and a controllable degree of polarization, with the sole condition that the frequency shift is much higher than the bandwidth of the detector to be used with.

This light emitting device **190** can be implemented either by tailored solid-state and semiconductor laser cavities, or by combining two orthogonal states using beam combination setups.

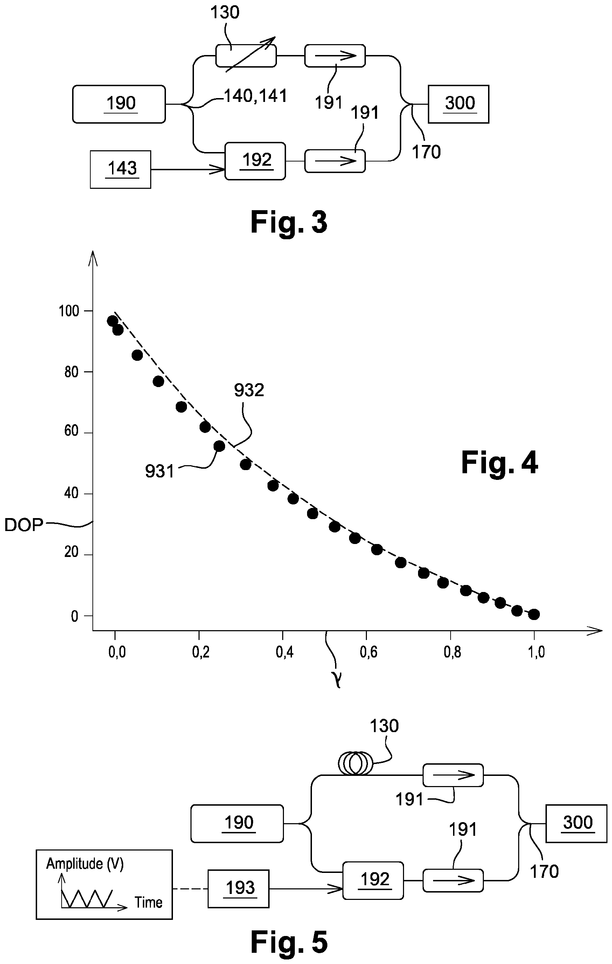

For example, the emitting module **100,** depicted in figure 3, is based on a commercial single-mode fiber laser. The coherent light beam **210** is split by the beam splitter **140,** which can be a polarization beam splitter as illustrated in figure 3, into the first light beam **201** having the first polarization component **203** and the second light beam **202** having the second polarization component **204** such that the first polarization component **203** is orthogonal to the second polarization component **204**. An isolator **191** in each arm may enhance the polarimetric purity and may avoid any back-reflection towards the light emitting device **190**. The output stability may be ensured by a careful match of the arms lengths and by an appropriate shielding. The frequency shifter **192,** an acousto-optic modulator in this example (AOM for short), inserted in one of the arms may introduce a frequency shift of $\Delta v = 80$ *MHz,* while a controllable intensity attenuator **130** like a variable optical attenuator (VOA for short), in the other arm may enable to control the intensity imbalance $\gamma$ as described above.

The degree of polarization may be measured with a detector **300,** a commercial polarimeter like Thorlabs PAT9000 for example, placed at the Mach-Zehnder architecture output. The polarimeter bandwidth may be only 10 Hz, $\tau_{detector} = 0.1s$, which may be much smaller than the 80 MHz detuning introduced by the AOM, $\tau_{beam} = 12.5ns$, so $\tau_{beam}$ is negligible compared to $\tau_{detector}$ and a time-averaged beam expected is described as follows:

$$\vec{S} = \langle \vec{S}(t) \rangle = \begin{bmatrix} 1 \\ \dfrac{1-\gamma}{1+\gamma}\, C_{2\alpha}\, C_{2\epsilon} \\ \dfrac{1-\gamma}{1+\gamma}\, S_{2\alpha}\, S_{2\epsilon} \\ \dfrac{1-\gamma}{1+\gamma}\, S_{2\epsilon} \end{bmatrix}$$

A degree of polarization of 0 should be obtained for a perfect balancing of both first and second polarization components **203,204** where $\gamma = 1$, while a complete vanishing of one of the polarization component is $\gamma = 0$ would naturally yield a completely polarized beam at the light emitting device output. The variable optical attenuator may be manually varied between the minimum and maximum attenuation values, 0 and 40 dB in this example, to sweep the complete range of $\gamma$ between 0 and 1, which may be experimentally determined by measuring the total power at the module output and the power after the variable optical attenuator. The results are shown in Figure 4. It can be observed that the measured degree of polarization **931** perfectly matches with the theoretical degree of polarization **932,** which demonstrates the control of the degree of the polarization of the light emitting module **100.**

Another method, for controlling the arms balancing, illustrates the versatility of this source architecture to generate a beam with custom degree of polarization. In particular, the manual change of the variable optical attenuator **130** may be replaced by a control of the amplitude of the radiofrequency signal sent to the acousto-optic modulator **192,** such an amplitude control being used to control the imbalance and accordingly the degree of polarization through:

$$DOP = \frac{1 - \gamma(t)}{1 + \gamma(t)} = \frac{|I_1(t) - I_2(t)|}{|I_1(t) + I_2(t)|}$$

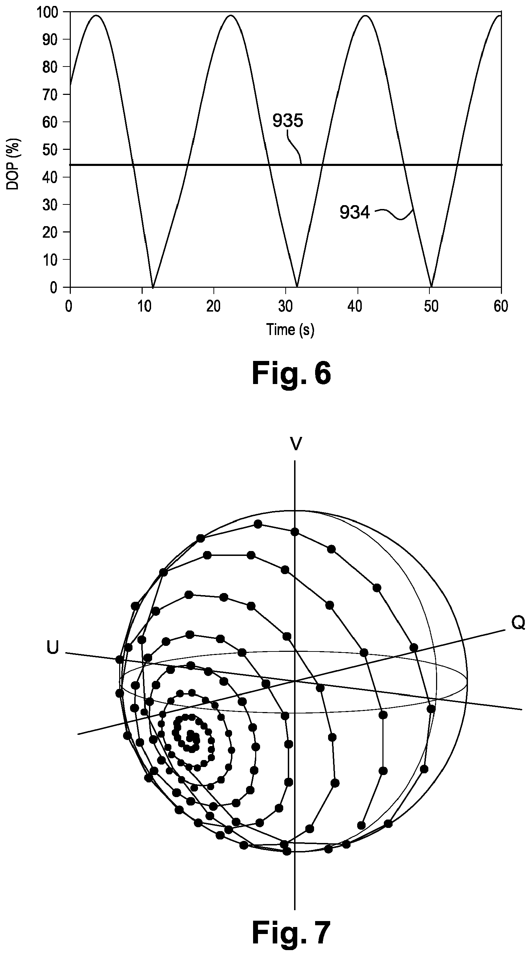

A waveform generator **193** may be used to produce a 80 MHz signal to drive the acousto-optic modulator, as shown in Figure 5. Applying a slow signal **934,** a triangle sweep modulation of time constant $\tau_{modulation}$ for example, to the amplitude of the 80 MHz electrical signal delivered by the waveform generator **193** to drive the acousto-optic modulator **192,** a time varying $\gamma(t)$ between 0 and 1 is achieved, so the coherent light beam **210** is gradually controlled from a completely polarized beam to a totally depolarized light beam **200** with a controllable degree of polarization. Firstly, a very low frequency of the triangle sweep modulation signal **934** may be set, namely 50 mHz, $\tau_{modulation}$ = 20s. In this case, $\tau_{beam}$ is negligible compared to $\tau_{detector}$ and to $\tau_{modulation}$, and the $\tau_{detector}$ is negligible compared to $\tau_{modulation}$, so the detector **300** can effectively follow the degree of polarization fluctuation as a function of $\gamma(t)$. This is shown in Figure 6, where it can be observed that the degree of polarization may vary from the maximum and minimum degree of polarization values throughout the period of the slow triangular modulation signal **934.** However, if a fast signal **935,** with a faster triangle sweep signal of 10 kHz for instance, is considered, then $\tau_{beam}$ is negligible compared to $\tau_{modulation}$ and to $\tau_{detector}$, and $\tau_{modulation}$ is negligible compared to $\tau_{detector}$. In this situation, the detector may measure a time-averaged degree of polarization, with $\langle\gamma(t)\rangle = 0.5$ and $\langle DOP(t)\rangle = 0.5$.

Regarding the state of polarization $\vec{S}$, one may show that the state of polarization of the time-averaged beam may be easily controlled by varying the state of polarization of the orthogonally-polarized first and second polarization components **203, 204,** in others words the orthogonally-polarized modes of the first and second modes $\vec{e}_1$, $\vec{e}_2$.

Now, it is important to stress the fact that with a fast detector ensuring that $\tau_{detector}$ is negligible compared to $\tau_{beam}$, the same apparatus provides a simple way to generate a depolarized light beam **200** with a state of polarization that temporally scans the full Poincaré sphere at very fast rate. From a certain point of view, it can be admitted that the depolarized light beam **200** is a polarized light beam for each instant since the fast detector sees a different polarization of the light beam for each measurement, therefore, it can be say that the depolarized light beam **200** is a polarized light beam whose the polarization evolve across the time.

On Figure 7, it can be appreciated that the state of polarization of the depolarized light beam **200** rotates gradually from the horizontal polarization to the prime meridian of the sphere as the first intensity value $I_1(t)$ of first polarization component **203** and second intensity value $I_2(t)$ of second polarization component **204** may get well balanced. In addition, if the light emitting device **190** used is a pulsed laser, this same configuration could provide a simple way to generate light pulses with controllable sequences of states of polarization scanning the full Poincaré sphere at very fast rate.

Thus, the versatile coherent light beam **210** based on the light emitting device **190** and the emitting module **100** may generate the depolarized light beam **200** with a controllable state of polarization and a controllable degree of polarization.

**Claims**

1. Process for emitting a depolarized light beam (200) with a controllable state of polarization and a controllable degree of polarization; said process comprising:

   - supply of a first light beam (201) having a first intensity value and a first frequency and of a second light beam (202) having a second intensity value and a second frequency; said first intensity value differing from said second intensity value;
   - frequency shift of at least one of said first frequency and said second frequency such that said first frequency differs from said second frequency; and,
   - combination of said first light beam (201) and of said second light beam (202) into said depolarized light beam (200).

2. Process according to claim 1, wherein said supply comprises an intensity attenuation of at least one of said first light beam (201) and said second light beam (202) such that said first intensity value differs from said second intensity value as a function of time.

3. Process according to claim 1 or 2, wherein said first light beam (201) has a first polarization component (203) and said second light beam (202) has a second polarization component (204) and wherein said supply comprises a polarization control of at least one of said first polarization component (203) and said second polarization component (204) such that said first polarization component (203) is orthogonal to said second polarization component (204).

4. Process according to any of claims 1 to 3, wherein said supply comprises a split of a coherent light beam (210) into said first light beam (201) and said second light beam (202).

5. Process according to any of claims 3 to 4, wherein said combination comprises a polarization adjustment configured to adjust the first polarization component (203) and the second polarization component (204).

6. Process according to any of claims 1 to 5, wherein said depolarized light beam (200) comprises a degree of polarization being the absolute value of the difference of said first intensity value and said second intensity value divided by the absolute value of the sum of said first intensity value and said second intensity value.

7. Emitting module (100) for emitting a depolarized light beam (200) with a controllable state of polarization and a controllable degree of polarization; said emitting module (100) comprising:

   - a supply unit (110); said supply unit (110) being configured to supply a first light beam (201) having a first intensity value and a first frequency and a second light beam (202) having a second intensity value and a second frequency, said first intensity value differing from said second intensity value intensity; said supply unit (110) comprising a frequency shifter (150) being configured to shift the frequency of at least one of said first frequency and said second frequency such that said first frequency differs from said second frequency;
   - a beam-combiner (170); said beam-combiner (170) being configured to combine said first light beam (201) and said second light beam (202) into said depolarized light beam (200).

8. Emitting module (100) according to claim 7, wherein said supply unit (110) comprises an intensity attenuator (130); said intensity attenuator (130) is configured to attenuate the intensity of at least one of said first light beam (201) and said second light beam (202) such that said first intensity value differs from said second intensity value as a function of time.

9. Emitting module (100) according to claim 8, wherein said intensity attenuator (130) is a variable optical intensity attenuator or an association of a waveplate and a polarizer.

10. Emitting module (100) according to any of claims 7 to 9, wherein said first light beam (201) has a first polarization component (203) and said second light beam (202) has a second polarization component (204) and wherein said supply unit (110) comprises a polarization controller (140) configured to control at least one of said first polarization component (203) and said second polarization component (204) such that said first polarization component (203) is orthogonal to said second polarization component (204).

11. Emitting module (100) according to the any of claims 7 to 10, wherein said supply unit (110) comprises a beam-splitter (141); said beam-splitter (141) is configured to split a light beam (210) from a coherent light emitting device (190) into said first light beam (201) and said second light beam (202).

12. Emitting module (100) according to any claims 7 to 11, wherein said frequency shifter (150) is an acousto-optic modulator and/or an electro-optic modulator.

13. Controllable state and degree of polarization light source comprising at least one light emitting device (190) and an emitting module (100) according to any of claims 7 to 12.

14. Controllable state and degree of polarization light source according to claim 13, wherein said emitting module (100) is comprised inside said at least one light emitting device (190).

15. Assembly comprising at least one emitting module (100) according to any of claims 7 to 14 or one controllable state and degree of polarization light source according to claim 13 or 14, configured to emit a depolarized light beam (200) with a controllable state of polarization and a controllable degree of polarization on an observed element (999) and a detector (300) having a bandwidth lower than the frequency shift of said frequency shifter (150), said detector (300) being configured to receive a transmitted depolarized light beam (299) from said observed element (999).

Fig. 1

$\nu_1 + \Delta\nu = \nu_2$

**Fig. 2a**

$$\nu_1 + \Delta\nu = \nu_2$$

**Fig. 2b**

EP 3 385 778 A1

**Fig. 3**

**Fig. 4**

**Fig. 5**

**Fig. 6**

**Fig. 7**

Europäisches
Patentamt

European
Patent Office

Office européen
des brevets

## EUROPEAN SEARCH REPORT

Application Number

EP 17 16 5383

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/151373 A1 (UNIV JAGIELLONSKI [PL]) 29 September 2016 (2016-09-29) * page 2; figure 1 * ----- | 1,3-7, 10-14 | INV. G02F1/01 |
| X | US 5 291 266 A (BURNS WILLIAM K [US] ET AL) 1 March 1994 (1994-03-01) * claims 1,2 * ----- | 1,3,5,7, 10,15 | |
| X | EP 0 928 080 A1 (PIRELLI CAVI E SISTEMI SPA [IT]) 7 July 1999 (1999-07-07) * paragraphs [0026] - [0030] * ----- | 1-5,7-15 | |
| A | US 8 331 024 B1 (ILLING RAINER M E [US]) 11 December 2012 (2012-12-11) * the whole document * ----- | 1-15 | |

TECHNICAL FIELDS
SEARCHED      (IPC)

G02F

The present search report has been drawn up for all claims

| Place of search | Date of completion of the search | Examiner |
|---|---|---|
| The Hague | 7 September 2017 | Aichmayr, Günther |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.....................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 17 16 5383

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2017

| Patent document cited in search report | | Publication date | Patent family member(s) | Publication date |
|---|---|---|---|---|
| WO 2016151373 | A1 | 29-09-2016 | NONE | |
| US 5291266 | A | 01-03-1994 | NONE | |
| EP 0928080 | A1 | 07-07-1999 | NONE | |
| US 8331024 | B1 | 11-12-2012 | NONE | |

EPO FORM P0459

For more details about this annex : see Official Journal of the European Patent Office, No. 12/82